# EUROPEAN PATENT SPECIFICATION

(11) **EP 1 174 783 B1**
(45) Date of publication and mention of the grant of the patent: **09.08.2006**
(21) Application number: 01116749.1
(22) Date of filing: 13.03.1992
(51) Int. Cl.: G05D 7/00, G05D 7/01, G05D 7/06, G05D 16/10, F24F 3/16, F24F 11/047

(54) **Process-chamber flow control system**
Durchflussregelungssytem für Prozesskammer
Système de régulation de débit pour chambre de processus

(30) Priority: 15.03.1991 US 669746
(43) Date of publication of application: 23.01.2002
(62) Divisional of application: 98100282.7
(73) Proprietor: PALMER, David W., North Andover, MA 01845 (US)
(72) Inventor: PALMER, David W., North Andover, MA 01845 (US)
(74) Representative: Mohun, Stephen John

(56) References cited:
- CH-A- 551 043
- FR-A- 2 216 498
- FR-A- 2 389 933
- US-A- 5 000 221

## Description

### Technical Field

This invention generally relates to a system for regulating the flow of a fluid, in particular a gas, into and out of a process chamber.

### Background Art

In a heating, ventilating, and air conditioning (HVAC) system, air flow is typically controlled using resistors to slow down the flow of air at different points to obtain the proper air balance throughout a building. These resistors may be comprised of gate valves, butterfly valves or dampers, and may be fixed, adjustable or motorized. When one resistor is adjusted, the pressure level throughout the HVAC system will change; any change in the HVAC system pressure will affect the flow of air past every other resistor. Thus, adjusting a resistor at the output causes "cross-talk." Previous attempts to solve the problem of air flow control have automated the resistors using microprocessors and servo-motors.

Municipal gas companies in the United States distribute gas through a network that is terminated with pressure regulators. An example of a previously considered regulator is described in FR-A-2389 933 wherein the regulator has a piston regulating flow between a high pressure chamber and a low pressure chamber. Piston control is effected with variances of control pressures on piston surfaces in respective control and balancing chambers. In these gas distribution systems the pressure at the point of use is fairly independent of pressure changes throughout the distribution network. This can be accomplished because the distribution network is designed to withstand large pressures, and a large pressure drop can be caused at the point of use.

The approach, taken by gas companies, of providing a pressure regulator at the point of use has not been practical for the HVAC industry, because the HVAC industry moves very large quantities of air at very low pressure, and because the HVAC industry is usually more interested in controlling mass flow, not pressure. The comfort of the environment is determined by the thermal mass of hot and cold air that is moved.

Safety valves used in the gas industry, and in other fields involving the handling of fluids under high pressure, open or close only in extreme situations where a large rise or drop in pressure poses a danger. (Gas companies have safety valves that shut off the flow of gas when there is a large decrease in pressure, since such a decrease may be due to a leak downstream of the valve. Many safety valves vent fluid from a conduit when there is a large increase in pressure in order to prevent the pressure in the conduit from increasing beyond the bursting point of the conduit, or beyond the capability of machinery connected to the conduit.) Other valves such as those used in gasoline pumps, also shut off flow automatically when the backpressure increases to a certain point, indicating that the tank being filled is full. These safety valves and gasoline-pump valves are designed to be either fully opened or fully closed, and are not designed to precisely regulate the fluid flow.

One of the most complex problems confronted by the HVAC industry is controlling process chambers, such as the clean rooms used in semiconductor integrated-circuit chip manufacturing, or the medical and biotechnology laboratories kept at below atmospheric pressure to prevent potentially dangerous microbes from blowing out of the laboratories.

Clean room requirements dictate that the environment be kept at a constant temperature and humidity (typically within a few degrees and a few percent), that the mass flow into the environment be kept constant, and that the flow be distributed evenly across a ceiling. Clean room ceilings are constructed with special filters designed to remove very small particles from the air entering the room. In addition to being clean, the air leaving the filter should be at an exact velocity. The ceilings are designed to disperse the air into the clean room at the same velocity over the entire surface of the ceiling. The ceilings and filters are constructed to add as little resistance to the air flow as possible, and so that there is only little variation from one filter to the next.

In order to deliver the same mass flow to each filter, the HVAC industry uses a network of resistors deployed throughout the air delivery system. The air flow through each filter is controlled by adding or removing resistance. In a single clean room the ceiling may contain as many as 150 filters. A process called balancing is used to adjust the filter flow rates. The resistors are repeatedly adjusted in sequence, until the flow rate is within the specified range, or until the amount of time the clean room is down, during the balancing process, gets too expensive. After the balancing is completed, the whole network is still subject to changes in the supply pressure and the demand requirements of the clean room.

Air is drawn out of a clean room in two ways: some of the air exits the room through process equipment and other work stations with fume hoods, and some air exits directly through vents. It is frequently important that a constant flow rate or a constant partial vacuum be maintained in the process equipment in order to minimize defects in the integrated circuit chips being manufactured and in order to ensure that noxious fumes do not leak from the process equipment or fume hoods and thereby endanger personnel working nearby. Air flowing from the process equipment can be treated at a central location and then can be exhausted to the outside. Air that flows through the clean room, but does not flow through the process equipment may be recycled through the clean room. Clean rooms are typically kept at a pressure slightly above atmospheric pressure, so that dust does not enter the clean room when the doors to the clean room are opened.

With regard to safety, medical and biotechnology laboratories have similar problems similar to those of integrated chip manufacturing areas. Improper vacuums or flow rates in fume hoods can expose personnel to dangerous microbes. Likewise, air flowing from fume hoods can be treated at a central location before being exhausted to the outside. These laboratories are frequently kept at a pressure slightly below atmospheric pressure, so that microbes do not accidentally blow out of the laboratories when the laboratory doors are opened.

The present invention is defined in the attached independent claim to which reference should now be made. Further, preferred features may be found in the dependent claims appended thereto.

The system that is the subject of the present invention, controls air flow from a source through an environment, such as a process chamber, to an exhaust. Of course, in order to create this flow, the source must have a higher pressure than the environment and the exhaust must have a lower pressure than the environment. Typically, the pressures of the source of air to the process chamber and of the exhaust from the process chamber vary more rapidly and by greater amounts than the pressure of air in the process chamber. In the system, conduits leading to and from the environment have two stages of regulation: (i) a regulation stage that maintains in a plenum a pressure that is a constant amount above or below the pressure of the environment, and (ii) an adjustable valve stage that creates a significant pressure drop between the plenum and the environment. The regulation stage has a plenum disposed between the environment and the pressure source, which may be either a source of air at a pressure higher than that of the environment, or an exhaust, which provides a partial vacuum to the environment. The pressure of the plenum is between the pressures of the environment and the pressure source. The regulation stage includes a piston having a frontal face exposed to fluid in the plenum flowing between the environment and the pressure source and having a distal face exposed to the environment's pressure. The piston is mounted so as to variably impede the flow of air through the regulator and so that the weight of the piston tends to move the piston in a direction so as to lessen the piston's impedance on the air flow. These two stages are placed in conduits flowing to and from the environment. It is preferable that these two stages are placed in several parallel conduits that all flow into the environment from a source, or that all flow from the environment to an exhaust.

In a device that regulates flow from an environment to an exhaust, the piston has an aperture disposed therein, through which fluid flows. A deflector, fixedly mounted adjacent to the aperture, may be used for directing the fluid flowing through the aperture radially across the frontal face of the piston. This device may regulate the flow of fluid from an environment to a vacuum source. In such a device, an increase in pressure on the distal face of the piston tends to increase the piston's impedance on the fluid flow, and an increase in pressure on the frontal face of the piston tends to lessen the piston's impedance on the fluid flow. The restoring force is exerted on the piston so as to tend to lessen the impedance on the fluid flow.

### Brief Description of the Drawings

Fig. 1 shows how the flow into and out of a process chamber may be controlled.
Figs. 2 and 3 show devices for regulating the flow of air from a source to an environment.
Figs. 4 and 5 show devices for regulating the flow of air from an environment to an exhaust system.

### Description of Specific Embodiments

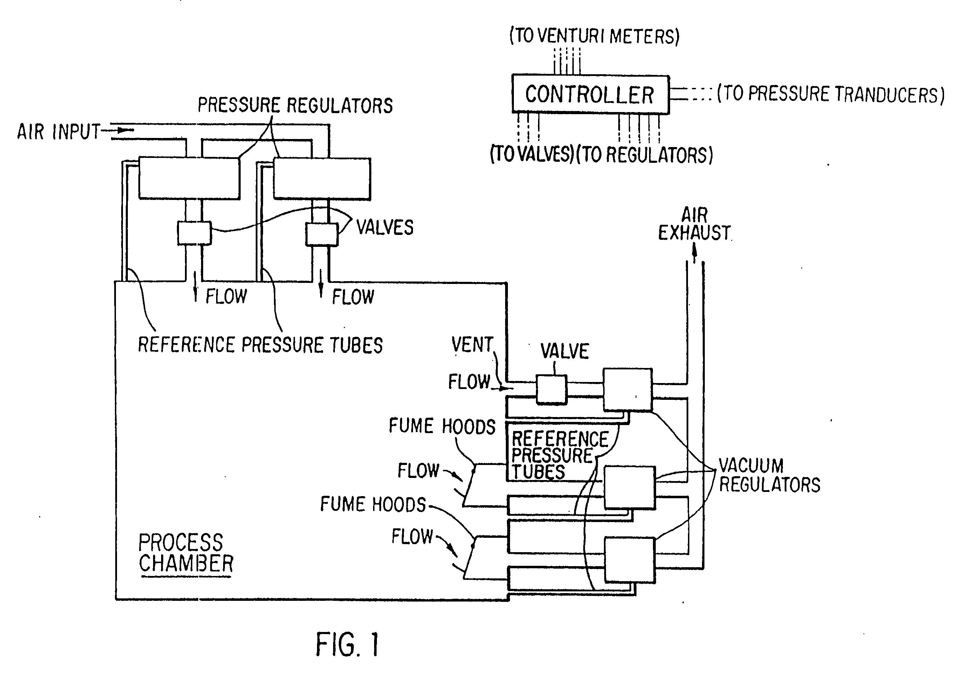

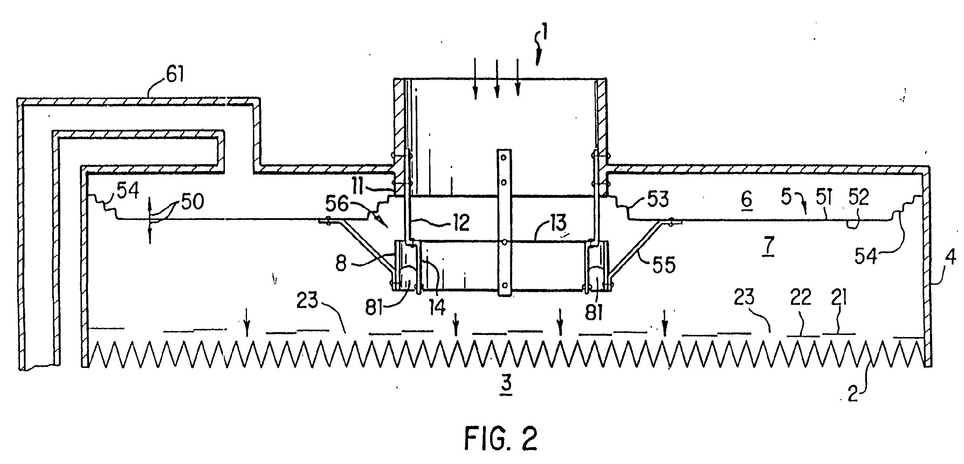

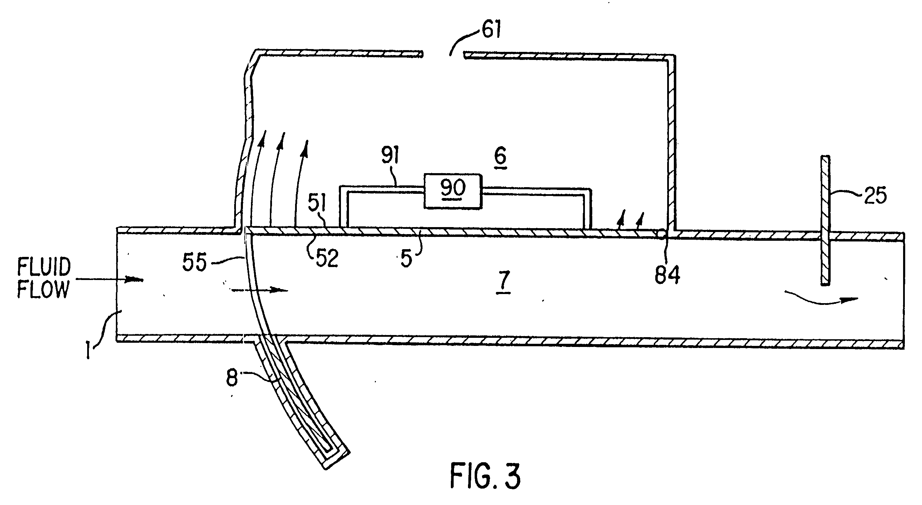

Fig. 1 shows how the two-stage control system may be employed in order to control air flow into and out of a process. The air input is at a significantly higher pressure than the pressure in the process chamber and is prone to wide and rapid pressure variations. The flow from the air input branches out into several parallel conduits (two such conduits are shown in this figure) before reaching the process chamber. In each of these conduits is located a pressure regulator, which maintains in a plenum a pressure that is a constant amount greater than the pressure in the process chamber and that is, of course, less than the pressure at the air input. (As is discussed below with regard to Figs. 2 and 3, these pressure regulators maintain a constant pressure in the plenum--with respect to the process chamber--by connecting to a piston a gate that variably impedes the flow between the air input and the plenum as the piston moves up and down. One side of the piston is exposed to the plenum, and its other side is exposed, through the reference pressure tube, to the pressure in the process chamber; thus, the piston can move in response to pressure fluctuations in the plenum and the environment. The piston may be mounted so that the pressure differential across the piston is counteracted by the weight of the piston, so as to establish a constant pressure differential across the piston.) Downstream from each of these regulators is located an adjustable valve, which impedes the flow between the plenum and the process chamber. These valves may be adjusted by a controller. As long as the pressure regulators maintain a constant pressure differential between the plenum and the process chamber, a constant flow rate is maintained for each setting of the adjustable valve.

Each conduit with a regulation stage and a valve stage operates independently of other conduits, in that if the flow through one conduit is interrupted or otherwise changes, the pressure in the plenum remains at a fairly constant amount above the process chamber's pressure (as long as the pressure at the air input remains high enough with respect to the process chamber), and thus the flow rate through a parallel conduit remains fairly constant. In other words, there is no cross-talk between regulators.

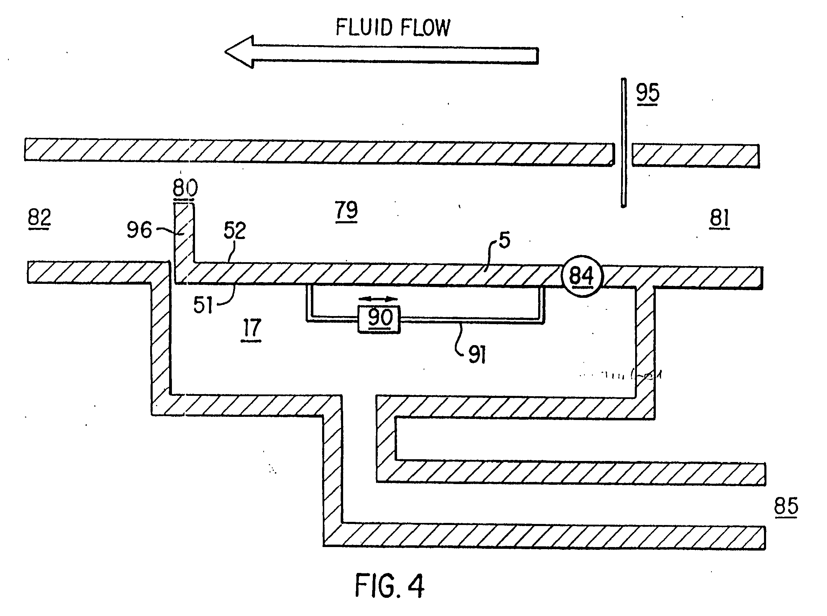

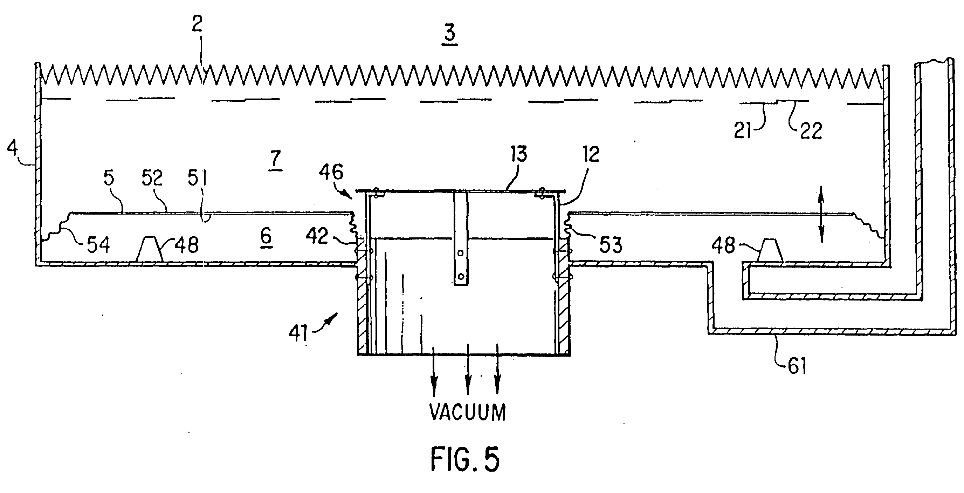

Air may exit the process chamber through a fume hood or directly through a vent. It is frequently desired to keep the pressure in the fume hoods at a constant pressure below that of the process chamber. To accomplish this, a vacuum regulator, which maintains in its plenum a partial vacuum with respect to the process chamber, is connected to each fume hood so as to apply a relatively small amount of impedance to the flow between the fume hood and the plenum. This low-impedance connection establishes a partial vacuum in the fume hood that is nearly equal to the partial vacuum maintained in the plenum and therefore is fairly constant with respect to the process chamber. When the door to the fume hood is opened, the regulator allows the flow rate through the fume hood to increase so as to maintain the partial vacuum. (The vacuum regulators are simlar to the pressure regulators, in that, as is discussed below with regard to Figs. 4 and 5, each vacuum regulator has a piston, the frontal face of which is exposed to air flowing through the plenum, and the distal face of which is exposed, through a reference pressure tube, to the pressure in the process chamber. The piston can move in response to pressure fluctuations in the plenum and the environment. The piston, as it moves up and down, variably impedes flow from the plenum to the vacuum source, i.e., the exhaust. The piston may be mounted so that the pressure differential across the piston is counteracted by the weight of the piston, so as to establish a constant pressure differential across the piston.)

To maintain a constant flow rate, as opposed to a constant partial vacuum, a valve is placed between the plenum and the process chamber to further impede flow, as is shown in the conduit leading from the vent in Fig. 1. Likewise, if it is desired to establish a constant flow rate through a fume hood, a valve is placed between the fume hood and the vacuum regulator. An adjustable valve is used in order to vary the desired flow rate. The adjustable valve may be controlled by the controller.

Like the conduits leading into the process chamber, there is no cross-talk between the vacuum regulators in the conduits leading from the process chamber. Each conduit leading from the process chamber that has a regulation stage and a valve stage operates independently of other conduits, in that, if the flow through one conduit is interrupted or otherwise changes, the flow rate through a parallel conduit remains fairly constant (as long as the exhaust vacuum remains strong enough). Each conduit leading from the process chamber that has only a regulation stage (to maintain a constant partial vacuum in a fume hood) also operates independently of other conduits, in that, if the flow through one conduit is interrupted or otherwise changes, the vacuum in a fume hood connected to a parallel conduit remains fairly constant (as long as the exhaust vacuum remains strong enough).

A venturi meter may be disposed in each of the conduits leading to or from the process chamber, so as to provide flow rate information to the controller, which in turn may adjust the valves in the conduits. The controller may also recieve information from pressure tranducers regarding the pressure in the process chamber and the pressure outside the process chamber. By adjusting flow into and out of the process chamber, and monitoring the information from the pressure transducers inside and outside of the process chamber, the controller can ensure that the pressure in the process chamber remains above or below the outside pressure.

Fig. 2 shows a device containing a pressure regulator and an adjustable valve, wherein air flowing from a source, which provides air at a relatively high pressure, through an input **1** and a pleated filter **2** into a process chamber **3** (e.g., a clean room environment). The housing **4** is divided into two chambers, a chamber **6** and a plenum **7.** The chamber **6** is at a reference pressure, and may be vented (by means of a tube **61** for example) to the clean room **3,** so that the reference pressure in the chamber **6** is the same as the pressure of the clean room **3.** The plenum **7** and the chamber **6** are separated by a movably mounted piston **5.** One face of the piston **5,** the frontal face **52,** is exposed to the air in the plenum **7.** The other face, the distal face **51** is exposed to the reference pressure in the chamber **6.** The piston **5** may move in the directions indicated by the arrows **50**. The piston **5** has a aperture **56** in its center. Air flowing from the input **1** passes through this aperture **56.** The inner edge of the piston **5** is connected to the valve seat **11** by a membrane **53.** The outer edge of the piston **5** may be connected to the housing **4** by a membrane **54.** A deflector **13** may be connected to the valve seat **11** by struts **12.** The deflector **13** redirects the flow of air from a direction that is parallel to the direction that the piston **5** may move, into axial directions that are transverse to the direction of movement of the piston **5.** Connected to the piston **5** by struts **55** is an annular gate **8,** which is located around the deflector **13** and which moves with the piston **5.** In the preferred embodiment, the deflector **13** does not move. Rolling springs 81 may connect the gate 8 to struts 14 mounted on the bottom of the deflector **13.** Although they are not not necessary, the rolling springs **81** may provide lateral stability to the piston **5** and help smooth the vertical motion of the piston **5.** As the gate **8** moves with the piston **5,** it variably restricts the flow of air through the device.

Air flowing through this device passes from the input **1**, then is redirected by the deflector **13** past the gate **8,** through the plenum **7,** and then passes through the filter **2** into the clean room **3.** How much the gate **8** impedes the air flow depends on the piston's **5** position, which in turn depends on the pressure difference between the plenum **7** and the chamber **6,** and the restoring force working on the piston **5.** In the device shown in Fig. 2, the restoring force is the combined weight of the piston **5,** the gate **8** and the struts **55** connecting the two. This weight tends to open up the gate **8** and thereby lower the impedance to the flow that the gate causes. (By using the weight of the piston-strut-gate struture as the only restoring force, a constant restoring force is obtained. A constant restoring force is desirable for maintaining a constant pressure differential across the piston.) When the pressure in the plenum **7** becomes sufficiently greater than the pressure in the chamber **6,** the piston **5** and the gate **8** rise and cause an increase in impedance on the flow by the gate **8.** The increase in impedance by the gate **8** lowers the flow rate of the air. The piston **5** and gate **8** will come to a position of equilibrium, so as to cause a constant pressure differential between the plenum **7** and the chamber **6.**

Thus, when the venting tube **61** is vented to the environment **3,** the pressure in the plenum **7** is constant relative to the pressure in the environment **3.** By maintaining a constant pressure drop across the filter **2** the device can maintain a fairly constant mass flow rate.

Without this device a drop in the clean room pressure would tend to cause the mass flow rate to increase, because there is a larger pressure drop between the source and the clean room **3.** With the device, a drop in the clean room pressure causes the pressure in the chamber **6** to drop, because the chamber **6** is vented by tube **61** to the clean room. The drop in chamber pressure in turn causes the piston **5** and gate **8** to rise and increase the impedance on the air flow by the gate **8.** This increase in impedance counteracts the larger pressure drop between the source and the clean room, so the mass flow rate remains fairly constant. Conversely, an increase in clean room pressure would tend to open up the gate **8** and lower the impedance.

Similarly, without this device an increase in pressure at the source would tend to cause an increase in the mass flow rate. With the device, an increase in pressure at the input **1** causes a momentary increase of pressure in the plenum **7,** which in turn causes the piston **5** and gate **8** to move up. The rise in the gate **8** increases the impedance on the flow, thereby counteracting the larger pressure drop between the source and the clean room **3.** Conversely, a drop in the input pressure would tend to open up the gate **8** and lower the impedance.

When there is little or no flow through the device, the gate **8** and piston **5** drop to their lowest position and provide the smallest impedance to the flow that the gate **8** can provide. Thus, when there is little or no flow, the device is fully open. The device does not have to be re-set after the flow has stopped. When the flow restarts and increases to a certain amount, the gate **8** and piston **5** rise to increase the impedance to the flow.

The device shown in Fig. 2 shows a preferred embodiment, wherein the gate is rigidly attached to the piston **5,** so that the gate **8** and piston **5** move in unison. The piston and gate may also be attached by other means, such as levers or other types of mechanisms, so that, as the piston **5** rises, the gate **8** increases its impedance on the flow, and, as the piston drops, the gate lessens its impedance on the flow.

The filter **2** provides a constant resistance to the air flowing from the plenum **7** to the environment **3.** Additional resistance can be provided by means of grids **21** and **22**, which form orifices **23.** Grid **21** is movable, so that the size of the orifices **23,** and thus the resistance to flow from the plenum **7** to the environment **3,** may be varied. The pressure in the plenum **7** relative to the environment **3** can be controlled by moving grid **21.** The sliding of the movable grid **21** can be done by a stepper motor controlled by the controller. The orifices **23** may be of different sizes depending on their position within the device in order to disperse the air evenly through the filter.

Fig. 3 shows an alternative to the Fig. 2 device, wherein the piston **5** is hingedly mounted. The piston **5** is connected to the gate **8** by means of struts **55**. The piston **5** rotates up and down, so that it and the gate **8** move in a direction that is transverse to the direction of flow. The frontal face **52** of the piston **5** is exposed to air flowing through the conduit, and the piston's distal face 51 is exposed to a reference pressure chamber **6,** which is preferably in fluid communication through a port **61** with an environment (e.g., a process chamber) downstream of the device. The input **1** of the device is connected to a source of air. Air flows past the struts **55** and the gate **8,** and then past the piston **5.** Downstream of the piston **5** is a gate valve **25**, which may be moved up and down to alter the flow rate. The gate valve **25** in the Fig. 3 device performs the same function as the adjustable grid structure **21** and **22** of the Fig. 2 device. The piston **5** and the gate **8** in the Fig. 3 device are in their lowest position, which is consistent with a low flow rate. When the flow rate increases beyond a certain point (i.e., when the pressure differential between the piston's frontal and distal faces, **52** and **51**, overcomes the weight of the piston-strut-gate structure, **5, 55** and **8--**or other restoring force), the piston **5** pivots upward in the direction indicated by the arrows extending from the piston's distal face **51.** The upward movement of the piston **5** causes the gate **8** to move upward to impede the flow. The gate **8** increases the impedance on the flow to counter any further increase in pressure at the input **1.** Thus, the device is able to maintain a constant pressure differential between the plenum **7** and the chamber **6,** the differential being related to the restoring force exerted on the piston, which in this case is the weight of the piston-strut-gate structure. By setting the pressure in the chamber **6** equal to the pressure downstream of the gate valve **25,** a constant pressure drop across the gate valve **25** can be maintained. The position of the gate valve **25** can be adjusted to accurately control the flow rate. The restoring force created by the weight of the piston **5** can be modified by moving a slidable weight **90** along a rod **91,** which may be accomplished by a stepper motor controlled by the controller.

Fig. 4 shows a mass flow regulator for controlling flow from the process chamber to an exhaust. Air flows from the input **81,** past a variable resistor, which in this case is a gate valve **95,** into a plenum **79.** Air moves over the frontal face **52** of the piston **5.** The air flow is then modulated by constriction point **80,** which is formed by the upturned section **96** at the end of piston **5.** The piston **5** rotates about hinge **84**, so that member **96** moves in a direction transverse to the air flow. Preferably, the output **82** is connected to a vacuum source, but in any case the pressure at the output **82** must be lower than the pressure at the input **81**.

The pressure in the plenum **79** is related to the fluid forces on the frontal and distal faces, **52** and **51,** of the piston **5,** and the restoring force on the piston **5.** In the device shown in Fig. 4, the downward restoring force is the weight of the piston **5.** Restoring force may also be supplied or modified by a spring, or, as shown in Fig. 4, by slidable weight **90,** which may be moved along rod **91** by a stepper motor controlled by the controller. Thus, the restoring force acting on the pistons in the regulators shown in Figs. 3 and 4 may be adjusted by the controller shown in Fig. 1. The restoring force tends to open the constriction point **80.** The restoring force balances the force caused by the pressure differential between the plenum **79,** which the air flows through, and the reference-pressure chamber **17** (which should have a higher pressure than the plenum **79** does), so that the piston **5** floats. One may alter the pressure differential between the plenum **79** and the chamber **17** by altering the restoring force on the piston **5,** such as by using the slidable weight system shown. It is important that the vacuum at the output **82** be strong enough to cause the piston **5** to float; without a sufficiently strong vacuum the regulator will not be able to maintain a constant pressure in the plenum **79**. With a sufficiently strong vacuum, the pressure in the plenum **79** will remain constant if the restoring force remains constant and the pressure in the chamber **17** remains constant. The chamber **17** is in fluid communication with the reference port **85,** which is connected to the process chamber, from which air flows to the input 81.

If the pressure at the output **82** decreases, more air would tend to flow from the plenum **79** past the constriction point **80** to the output, which in turn would cause the pressure in the plenum **79** to drop, except a drop in the plenum pressure causes the piston **5** to rotate up and throttle the flow of air through the constriction point **80**. Likewise, an increase in pressure at the output **82** causes the constriction point to widen. In this way, as long as there is a sufficient vacuum at the output **82** to compensate for the downward restoring force on the piston **5,** the pressure in the plenum **79** remains a constant amount less than the reference pressure and independent of the pressure at the output.

Thus, the plenum **79** acts as a constant vacuum sink drawing in air flowing from input **81** past the gate valve **95,** which acts as a resistor. If the differential pressure between input **81** and plenum **79** remains constant, and the resistance to flow between input **81** and plenum **79** remains constant, the air's mass flow rate will remain constant. The mass flow rate may be changed by changing the resistance to fluid flow caused by the gate valve **95.** A constant pressure differential between the input **81** and the plenum **79** can be maintained by venting the reference chamber **17** to the input **81,** which is accomplished by connecting reference port **85** to the input **81.** Adjusting the gate valve **95** causes more or less fluid to flow into plenum **79,** and the piston **5** and impeding member **96** will move down or up to modulate the pressure in the plenum **79.** By connecting the reference port **85** to the input **81,** a change in the input pressure will cause a corresponding change in the pressure of chamber **17,** which in turn will cause the piston **5** to move and either widen or narrow the constriction point **80** to maintain a constant pressure differential between the plenum **79** and the input **81.** By combining variable resistor **95** with a regulator that maintains a constant pressure differential across the variable resistor **95,** the device shown in Fig. 4 performs very well as a mass flow controller.

The strength of the partial vacuum in the plenum **79** can be varied by adjusting the slidable weight **90.** The regulator shown in Fig. 4 may be used to maintain a constant partial vacuum in a fume hood, if the gate valve **95** is eliminated or is set so as to impart very little impedance to the flow, if the input **81** is attached to the fume hood, and if the reference tube **85** is connected to the environment outside of the fume hood.

The devices shown in Figs. 1 and 2 of U.S. Patent No. 5,000,221 may also be used as a fume-hood vacuum regulator in Fig. 1 of the present application.

Fig. 5 shows a device that is somewhat similar in structure to the device shown in Fig. 2 above. However, it is connected to a vacuum source and is more similar in function to the device shown in Fig. 4 herein (or the devices shown in Figs. 1 and 2 of U.S. Patent No. 5,000,221). In this device air passes from an environment **3**, through a filter **2,** then through the plenum **7** and an outlet **41** to a vacuum source.

The piston **5** has two faces, a frontal face **52** on the top of the piston **5,** and a distal face **51** on the bottom of the piston **5.** The piston **5** divides the interior of the housing into the plenum **7** and the reference chamber **6**, which may be vented by means of tube **61** to the pressure in the environment **3.** The outer edge of the piston **5** may be attached to the housing **4** by a membrane **54.** The piston 5 has an aperture, through which the fluid may flow from the plenum **7** to the output **41.** Membrane **53** may connect the edge of the piston's aperture to the valve seat **42**. A barrier **13** is mounted over the output **41** by struts **12.** The space between the barrier **13** and the valve seat **42** forms an evacuation port **46,** that may be partially occluded as the piston **5** moves up and down. To prevent the piston **5** from settling on the bottom surface of the housing **4** the outer perimeter of the valve seat **42** may be wider than the piston's aperture, or alternatively stops **48** may be used.

The pressure in the plenum **7** is lower than the pressure in the environment **3;** a pressure drop is caused by the flow through the filter 2. When the pressure in the plenum is sufficiently less than the pressure in the reference chamber **6**, so as to overcome the weight of the piston **5,** the piston will tend to float and occlude the evacuation port **46.** The device is able to maintain a constant pressure differential between the plenum **7** and the reference chamber **6.** For instance, if the pressure at the output **41** drops (i.e., the strength of the vacuum source increases), the pressure in the plenum **7** tends to drop as well; however, such a drop in the plenum pressure tends to lift up the piston **5,** and thereby increase the impedance of the flow through the evacuation port **46.**

This device can maintain a constant mass flow rate. By maintaining a constant pressure differential across the piston **5** and connecting the reference chamber **6** to the environment **3,** one can maintain a constant pressure differential across the filter **2** and the grids, **21** and **22.** If the resistance to the flow caused by the filter **2** and the grids, **21** and **22,** is kept constant, then a constant mass flow rate through the filter **2** is maintained. The flow rate may be adjusted by adjusting the resistance caused by the grids, **21** and **22,** as discussed above in relation to the Fig. 2 device.

## Claims

1. A system for controlling air flow between an environment (3) and a pressure source having a pressure that differs from the environment's pressure and that varies more quickly than the environment's pressure, the system comprising:
a regulator, having a plenum (7) disposed between the environment (3) and the pressure source, the regulator including a piston (5) having a frontal face (52) exposed to fluid in the plenum (7) flowing between the environment and the pressure source, the piston further having a distal face (51) exposed to the environment's pressure, the piston (5) being mounted so as to variably impede the flow of air through the regulator for maintaining in the plenum a pressure that is between the pressures of the environment (3) and the pressure source, and that is a constant amount different from the environment's pressure, **characterised in that** the piston is arranged so that the weight of the piston (5) tends to move the piston in a direction (50) so as to lessen the piston's impedance on the air flow; the system further comprising
an adjustable valve (21, 22), located between the regulator and the environment, for further impeding the flow of air.

2. A system according to claim 1, wherein the pressure source is a source of air at a higher pressure than the air in the environment (3), and
wherein the piston (5) includes a gate (8) for impeding the flow of air upstream of the plenum (7), and
wherein the regulator maintains a pressure in the plenum (7) that is a constant amount above the environment's pressure (3).

3. A system according to claim 2, wherein the pressure source is at a lower pressure than the air in the environment (3) and is an exhaust for the environment air,
wherein the piston (5) impedes the flow downstream of the plenum (7); and
wherein the regulator maintains a pressure in the plenum (7) that is a constant amount above the environment's pressure.

4. The system according to claim 1, wherein the regulator regulates the flow of fluid from the environment to an evacuation means, the regulator having:
an output (41) in communication with the evacuation means;
a piston (5) having an aperture (46) disposed therein and being movably mounted proximate to the output (41) such that fluid flowing into the output passes through the aperture and so as to variably impede fluid flowing to the evacuation means, the piston (5) having a frontal face (52), exposed to fluid upstream from the aperture and a distal face (51) exposed to a reference pressure, wherein an increase in pressure on the distal face (51) of the piston tends to increase the piston's impedance on the fluid flow, and an increase in pressure on the frontal face (52) of the piston tends to lessen the piston's impedance on the fluid flow.

5. A device according to claim 4, wherein the areas of the frontal (52) and distal (51) faces are approximately equal.

## Patentansprüche

1. System zur Steuerung des Luftstroms zwischen einer Umgebung (3) und einer Druckquelle, die einen Druck aufweist, der vom Umgebungsdruck verschieden ist und der sich rascher als der Umgebungsdruck verändert, umfassend einen Regulator mit einer Druckkammer (7), angeordnet zwischen Umgebung (3) und Druckquelle, wobei der Regulator einen Kolben (5) aufweist, dessen Stirnfläche (52) ausgesetzt ist einem Fluid in der Druckkammer (7), das zwischen Umgebung und Druckquelle fließt, und dessen abgewandte Fläche (51) dem Umgebungsdruck ausgesetzt ist, wobei der Kolben (5) so montiert ist, dass er den Luftstrom durch den Regulator veränderlich drosselt und den Druck in der Druckkammer aufrecht hält, welcher zwischen dem Druck der Umgebung (3) und dem Druck der Druckquelle liegt und der um einen konstanten Wert vom Umgebungsdruck verschieden ist, **dadurch gekennzeichnet, dass** der Kolben so angeordnet ist, dass das Gewicht des Kolbens (5) den Kolben tendenziell in einer Richtung (50) verschiebt, dass die Drosselung durch den Kolben auf den Luftstrom verringert wird, wobei das System ein einstellbares Ventil (21, 22) umfasst, angeordnet zwischen Regulator und Umgebung, das den Luftstrom weiter drosselt.

2. System nach Anspruch 1, wobei die Druckquelle eine Quelle für Luft ist mit einem höheren Druck als dem der Luft in der Umgebung (3), wobei der Kolben (5) ein Gatter (8) besitzt zur Drosselung des Luftstroms stromauf der Druckkammer (7), und wobei der Regulator einen Druck in der Druckkammer (7) aufrecht hält, der einen konstanten Wert oberhalb des Umgebungsdrucks (3) liegt.

3. System nach Anspruch 2, wobei die Druckquelle auf einem niedrigeren Druck liegt als der der Luft in der Umgebung (3) und ein Ausstrom für die Umgebungsluft ist, wobei der Kolben (5) den Strom stromabwärts der Druckkammer (7) drosselt und wobei der Regulator einen Druck aufrecht hält in der Druckkammer (7), der einen konstanten Wert über dem des Umgebungsdrucks liegt.

4. System nach Anspruch 1, wobei der Regulator den Strom eines Fluids aus der Umgebung zu einer Evakuiereinrichtung steuert, wobei der Regulator besitzt
einen Ausgang (41), der in Verbindung mit der Evakuiereinrichtung ist;
einen Kolben (5), der eine Öffnung (46) darin angeordnet besitzt, und der verschieblich, dem Ausgang (41) zugewandt, derart montiert ist, dass das Fluid, welches in den Ausgang fließt, durch die Öffnung geht und er so verschieblich das Fluid drosselt, welches zur Evakuiereinrichtung strömt, wobei der Kolben (5) eine Stirnseite (52) besitzt, die dem Strom stromaufwärts der Öffnung ausgesetzt ist, und eine abgewandte Seite (51), die dem Referenzdruck ausgesetzt ist, wobei eine Erhöhung des Drucks auf der Stirnseite (51) des Kolbens dazu führt, die Drosselung des Kolbens auf den Fluidstrom zu erhöhen und eine Erhöhung des Drucks auf der Stirnseite (52) des Kolbens dazu führt, die Drosselung des den Kolben auf den Fluidstrom zu verringern.

5. Vorrichtung nach Anspruch 4, wobei die Flächen der Stirn- (52) und der abgewandten Seite (51) in etwa gleich sind.

## Revendications

1. Système servant à commander un écoulement d'air entre une atmosphère environnante (3) et une source de pression ayant une pression qui est différente de la pression de l'atmosphère environnante et qui varie plus rapidement que la pression de l'atmosphère environnante, le système comprenant :
un régulateur, comportant une chambre de tranquillisation (7) située entre l'atmosphère environnante (3) et la source de pression, le régulateur comprenant un piston (5) ayant une face frontale (52) exposée à un fluide dans la chambre de tranquillisation (7) s'écoulant entre l'atmosphère environnante et la source de pression, le piston comportant en outre une face distale (51) exposée à la pression de l'atmosphère environnante, le piston (5) étant monté de façon à gêner de façon variable l'écoulement d'air dans le régulateur pour maintenir dans la chambre de tranquillisation une pression comprise entre les pressions de l'atmosphère environnante (3) et de la source de pression, et dont la valeur est à une quantité constante différente de la pression de l'atmosphère environnante, **caractérisé en ce que** le piston est conçu de telle manière que le poids du piston (5) tend à déplacer le piston dans une direction (50) qui diminue la gêne exercée par le piston sur l'écoulement d'air ; le système comprenant en outre :
une vanne réglable (21, 22), située entre le régulateur et l'atmosphère environnante, pour gêner davantage l'écoulement d'air.

2. Système selon la revendication 1, dans lequel la source de pression est une source d'air, à une pression supérieure à l'air de l'atmosphère environnante (3), et
dans lequel le piston (5) comprend un obturateur (8) pour gêner l'écoulement d'air en amont de la chambre de tranquillisation (7), et
dans lequel le régulateur maintient dans la chambre de tranquillisation (7) une pression dont la valeur est à une quantité constante au-dessus de la pression de l'atmosphère environnante (3).

3. Système selon la revendication 2, dans lequel la source de pression est une pression inférieure à celle de l'air de l'atmosphère environnante (3) et constitue un dispositif d'échappement pour l'air de l'atmosphère environnante,
dans lequel le piston (5) gêne l'écoulement en aval de la chambre de tranquillisation (7) ; et
dans lequel le régulateur maintient dans la chambre de tranquillisation (7) une pression dont la valeur est à une quantité constante au-dessus de la pression de l'atmosphère environnante.

4. Système selon la revendication 1, dans lequel le régulateur régule l'écoulement de fluide de l'atmosphère environnante vers un moyen d'évacuation, le régulateur comportant :
une sortie (41) communiquant avec le moyen d'évacuation ;
un piston (5) comportant une ouverture (46) et monté de façon mobile à proximité de la sortie (41) de telle manière que le fluide s'écoulant dans la sortie passe par l'ouverture et de façon à gêner de manière variable le fluide s'écoulant vers le moyen d'évacuation, le piston (5) ayant une face frontale (52), exposée au fluide en amont de l'ouverture, et une face distale (51) exposée à une pression de référence, où une augmentation de la pression sur la face distale (51) du piston tend à augmenter la gêne à l'écoulement du fluide exercée par le piston, et une augmentation de la pression sur la face frontale (52) du piston tend à diminuer la gêne à l'écoulement du fluide exercée par le piston.

5. Dispositif selon la revendication 4, dans lequel les superficies des faces frontale (52) et distale (51) sont approximativement égales.
